# EUROPEAN PATENT APPLICATION

(11) **EP 1 411 097 A1**
(43) Date of publication of application: **21.04.2004**
(21) Application number: 03023144.3
(22) Date of filing: 10.10.2003
(51) Int. Cl.: C09J 131/04

(54) **Water-based adhesive compositions using waterborne polyesters**

(30) Priority: 15.10.2002 US 270769
(71) Applicant: AIR PRODUCTS POLYMERS, L.P., Allentown, PA 18195-1501 (US)
(72) Inventor: Choi, Yong-Hae, Suwon-Si Kyunggi-do, 442-802 (KR); KIM, Jong-Bok, Jahdong, Hawondaegu, Pusan 612-781 (KR); Lim, Tae-Jun, Gwankak-gu Seoul, 151-755 (KR)
(74) Representative: Kador & Partner

(57) **Abstract**

Water-based adhesive emulsion compositions comprising 30 to 60 wt % water and 40 to 70 wt % non-water adhesive components (solids), the adhesive solids comprising:
(a) 90 to 99.9 wt % of a VAE polymer;
(b) 0.1 to 10 wt % of a water-dispersible polyester; and
(c) 0 to 1 wt % of an emulsifier ( preferably 0.1 to 1 wt % emulsifier), and a multi-layer material comprising at least one layer of a substrate and at least one layer of the above described adhesive emulsion composition.

## Description

### TECHNICAL FIELD

Water based adhesive emulsion compositions containing waterbome polyesters which are useful in laminating a variety of substrates.

### BACKGROUND OF THE INVENTION

Adhesives used for lamination are typically solvent-based adhesives which comprise polyurethane resin or chloroprene rubber and organic solvents. However, due to various health and safety concerns and regulations, there has been an increased interest in the industry in developing water-based adhesives.

In order to achieve adhesion on difficult to bond surfaces, traditional vinyl acetate-ethylene (VAE) adhesive formulations have been highly plasticized or formulated. However, introduction of additional compounding aids adds to the complexity and cost of the formulations and, frequently leads to problems during the application and/or machining of the resulting adhesives. In addition, the list of additives available to the adhesive formulators is decreasing because many of the solvents and plasticizers used in the past are no longer environmentally acceptable.

JP 48-8328 (1973) discloses an example of a solvent-based adhesive composition for lamination of various substrates, such as polyolefin film, metal foil, polyester film, polyamide film and the like. The adhesive composition comprises 30 to 97 % by weight of an ethylene-vinyl acetate copolymer and 3 to 70 % by weight of a linear copolyester that is soluble in organic solvents and in which 95 to 50 mol % of the acid component is terephthalic acid residues and 20 to 70 mol % of the alcohol component is ethylene glycol residues. The ethylene-vinyl acetate copolymer preferably contains 28-40 % by weight vinyl acetate component and has a melt index of 6-150. The adhesive composition is reported to be commonly used by dissolving it in an appropriate organic solvent and applied as a solution to a film or other substrate to be bonded.

Another approach to improve the bonding of VAE adhesives to low polarity surfaces has been to add other monomers to the polymer. For example, U.S. 5,371,137 (Blincow et al. 1994) discloses VAE copolymer emulsions to which about 5% to about 85% of vinyl esters of C₄ to C₁₈ primary or secondary carboxylic acids have been added as a monomer. U.S. 5,500,251 (Burgoyne et al., 1996) disclose the incorporation of the following compounds into VAE systems to promote adhesion to low energy polyolefin surfaces: N-(4-alkylphenyl)acrylamides, N-(4-alkylphenyl)methacrylamides and N-(4-alkylphenyl)maleimides.

VAE adhesives with specific tensile mechanical properties are also known to be effective for bonding low polarity surfaces. US 5,872,181 (Daniels et al, 1999) discloses VAE polymer emulsions that can be used as adhesives in packaging applications and on difficult to bond surfaces such as polyethylene, poly(ethylene terephthalate), and oriented polypropylene. The VAE polymer contains about 55-80 wt % vinyl acetate, 15-45 wt % ethylene, and 0-30 wt % of one or more other ethylenically unsaturated copolymerizable monomer, based on the total weight of monomers with a cast film of the polymer having a defined tensile storage modulus.

### BRIEF SUMMARY OF THE INVENTION

This invention is directed to water-based adhesive emulsion compositions of 30 to 60 wt % water and 40 to 70 wt % non-water adhesive components (solids), the adhesive solids comprising:
(a) 90 to 99.9 wt % of a VAE polymer;
(b) 0.1 to 10 wt % of a water-dispersible polyester; and
(c) 0 to 1 wt % of an emulsifier.
It is preferred that the emulsifier be present in the adhesive solids component; a preferred amount is 0.01 to 1 wt % of emulsifier.

The VAE polymer comprises emulsion polymerized units of 80 to 97 wt % vinyl acetate; 3 to 20 wt % ethylene, and 0 to 10 wt % of one or more other ethylenically unsaturated monomers. The VAE polymer emulsion comprises 40 to 72 % solids.

The water-dispersible polyester, such as a sulfonated poly(ethylene terephthalate), is preferably used in the form of a waterborne dispersion.

This invention is also directed to a multi-layer material comprising:
at least one layer of a substrate; and
at least one layer of an aqueous based adhesive emulsion composition comprising 30 to 60 wt % water and 40 to 70 wt % non-water adhesive solids, the adhesive solids comprising:
   (a) 90 to 99.9 % by weight of a VAE polymer;
   (b) 0.1 to 10 % by weight of a water-dispersible polyester; and,
   (c) 0 to 1 % by weight of an emulsifier (preferably 0.1 to 1 % by weight).

Some of the advantages of the water-based adhesive compositions of this invention are:
- they have excellent storage stability at ambient, low and elevated temperatures;
- they provide good adhesion to a variety of substrates; and
- they exhibit good heat resistance.

### DETAILED DESCRIPTION OF THE INVENTION

The VAE polymer component comprises 90 to 99.9 wt %, preferably 95 to 99.5 wt %, of the adhesive solids in the water-based adhesive emulsion composition. The VAE polymer comprises 80 to 98 wt % (preferably 83 to 97 wt %) vinyl acetate; 3 to 20 wt % (preferably 3 to 17 wt %) ethylene, and 0 to 10 wt % (preferably 0 to 5 wt %) of one or more other ethylenically unsaturated monomer. Examples of other ethylenically unsaturated monomers are C₃-C₁₀ alkenoic acids, such as acrylic acid, methacrylic acid, crotonic acid and isocrotonic acid and their esters with C₁-C₁₈ alkanols, such as methanol, ethanol, propanol, butanol, and 2-ethylhexanol; vinyl halides, such as vinyl chloride; alpha, beta-unsaturated C₄-C₁₀ alkenedioic acids such as maleic acid, fumaric acid, and itaconic acid and their monoesters and diesters with the same C₁-C₁₈ alkanols; and nitrogen containing monoolefinically unsaturated monomers, particularly nitriles; amides; N-methylol amides; lower alkanoic acid ethers of N-methylol amides and allylcarbamates, such as acrylonitrile, acrylamide, methacrylamide, N-methylol acrylamide, N-methylol methacrylamide, N-methylol allylcarbamate, and lower alkyl ethers or lower alkanoic acid esters of N-methylol acrylamide, N-methylol methacrylamide and N-methylol allylcarbamate. The other ethylenically unsaturated monomer in the VAE polymer can be N-methylol acrylamide (MNA) at a level of 0.03 to 3 wt %. The VAE emulsion polymers used in this invention are commercially available products. Examples are AIRFLEX® EP705 polymer emulsion, AIRFLEX EP705K polymer emulsion, AIRFLEX EP706 polymer emulsion, AIRFLEX EP706K polymer emulsion, AIRFLEX EP707K polymer emulsion, AIRFLEX EP709 polymer emulsion, AIRFLEX EP724 polymer emulsion, AIRFLEX 400 polymer emulsion, AIRFLEX 400H polymer emulsion, AIRFLEX 300 polymer emulsion, AIRFLEX 320 polymer emulsion, AIRFLEX 7200 polymer emulsion, and AIRFLEX 465 polymer emulsion, all available form Air Products Polymers, L.P., and/or Air Products Korea.

The water-dispersible polyester resin component of the adhesive solids comprises 0.1 to 10 wt %, preferably 0.5 to 5 wt %, of the adhesive solids in the water-based adhesive emulsion composition. Suitable water-dispersible polyester resins for use in the aqueous adhesive emulsion are well known in the art and typically comprise the reaction product of an aromatic, aliphatic or cycloaliphatic polycarboxylic acid with an aliphatic or cycloaliphatic glycol, contain free acid functionality that is neutralized to a metal salt to afford water dispersibility, and have a weight average molecular weight (Mw) of 8,000 to 21,000. The water-dispersible polyester resin is desirably used in the form of a dispersion, preferably containing 5 to 30% solids. The polyesters used in this invention are readily available commercially and are well known. Examples of commercial polyester resins include EW-100, EW-120, EW-300, EW-320, available from SK Chemicals, Inc. of Korea. Further information on dispersible polyester resins that are suitable for this invention can be found in Korean patent KR 93-4618, assigned to SK Chemicals, Inc.

Illustrative of suitable water-dispersible polyester resins for use in the aqueous adhesive emulsion are materials comprising the reaction products of the following acid and glycol components:

(1) Acid component (mol % based on the acid component):
- 10 - 15 mol % of aromatic dicarboxylic acid which contains a sulfonate metal salt, such as for example, metal salts of sulfoterephthalic acid, 5-sulfoisophthalic acid, 4-sulfophthalic acid, 4-sulfonaphthalene-2,7-dicarboxylic acid; suitable metal salts being lithium, sodium, potassium, magnesium, calcium, copper and iron. Preferably the degree of sulfonation is 10 - 15 mol %, and the sulfonated aromatic acid is 5-sodium sulfoisophthalic acid;
- 30 - 90 mol % of aromatic dicarboxylic acid which does not contain sulfonate metal salt, such as for example, terephthalic acid, isophthalic acid, phthalic acid, oxophthalic acid, preferably a blend of terephthalic acid/isophthalic acid in mol ratios of 4/1 - 1/4.
- 0.5 - 10 mol % of polycarboxylic acid having a functionality of 3 or more, such as for example, trimellitic acid or pyromellitic acid.
- 0.5 - 10 mol % of dimeric acid having a carbon number of 36 - 72.
- 59.5 mol % or less of aliphatic or cycloaliphatic dicarboxylic acid, such as for example succinic acid, adipic acid, pimelic acid, sebacic acid, tetrahydrophthalic acid, hexahydrophthalic acid, and heptahydrophthalic acid.

(2) Glycol component
Suitable glycols include ethylene glycol, diethylene glycol, propylene glycol, 1,3-propanediol, 1,4-butanediol, neopentyl glycol, 1,5-heptanediol, 1,6-hexanediol, and 1,4-cyclohexanediol.

While the reaction weight ratio of the acid component to glycol component can vary, as is known in the art, it is often about 40:60.

In the preferred embodiment of the invention emulsifiers or surfactants are included to improve stability of the adhesive emulsion product. The emulsifiers or surfactants contemplated for the invention include any of the known and conventional surfactants and emulsifying agents, the nonionic materials; polyalkoxylated surfactants being especially preferred. Among the nonionic surfactants found to provide good results are the Igepal surfactants supplied by Rhone-Poulenc. The Igepal surfactants are members of a series of alkylphenoxy-poly(ethyleneoxy)ethanols having alkyl groups containing from about 7-18 carbon atoms, and having from about 4 to 100 ethyleneoxy units (preferably 10 to 30 mol of ethyleneoxy groups), such as the octylphenoxy poly(ethyleneoxy)ethanols, nonylphenoxy poly(ethyleneoxy)ethanols, and dodecylphenoxy poly(ethyleneoxy)ethanols. Examples of other nonionic surfactants include polyoxyalkylene derivatives of hexitol (including sorbitans, sorbides, manitans, and mannides) anhydride, partial long-chain fatty acid esters, such as polyoxyalkylene derivatives of sorbitan monolaurate, sorbitan monopalmitate, sorbitan monostearate, sorbitan tristearate, sorbitan monooleate and sorbitan trioleate. When used, the amount of emulsifier in the adhesive composition is 0.01 to 1 wt %, preferably 0.05 to 0.3 wt %, based on the adhesive solids in the water-based adhesive composition. If no emulsifier is added to the composition, the storage stability will be degraded although the adhesive still has other acceptable physical properties. If an excessive amount of an emulsifier is used, it may degrade physical properties such as adhesiveness.

The water-based adhesive composition according to the present invention can further comprise one or more other components selected from the group consisting of plasticizer, solvent, polyurethane resin, and epoxy resin.

The plasticizer is preferably a phthalate plasticizer. Preferred examples of phthalate plasticizers include, but are not limited to, dibutylphthalate, dioctyl phthalate, diethyl phthalate, dimethyl phthalate, more preferably dibutyl phthalate and dioctyl phthalate. A non-phthalate plasticizer can also be used. The amount of the plasticizer is preferably 2 to 10 wt % based on the adhesive solids in the water-based adhesive emulsion composition.

Examples of appropriate solvents include, but are not limited to, toluene, acetone, methylethylketone, cyclohexane, a monohydric alcohol such as methanol, ethyl alcohol, and a polyhydric alcohol. A proper solvent can be selected according to the application. The amount of solvent is preferably 2 to 20 wt %, based on the adhesive solids in the water-based adhesive emulsion composition.

The polyurethane resin comprises the reaction product of a polyol and a polyisocyanate or a polyisocyanate prepolymer. It is preferably an anionic water-based polyurethane dispersion containing 30 to 40 % solids. The polyurethane resins may be based on diphenylmethane diisocyanate, toluene diisocyanate or hexamethylene diisocyanate, polyhydroxycarboxylic acids and polyols as well known in the art. The amount of polyurethane in the adhesive composition is preferably 5 to 40 wt %, based on the adhesive solids in the water-based adhesive emulsion composition.

The amount of epoxy resin is preferably 5 to 30 wt %, based on the adhesive solids in the water-based adhesive emulsion composition. Examples of appropriate epoxy resins are those based on the reaction product of bisphenol-A and epichlorohydrin. Commercially available epoxy resins that can be used in this invention include KER 215, 232, 828, and 829, available from Kumho P&P in Korea.

The addition of a polyurethane or an epoxy resin to the water-based adhesive composition is particularly useful for improving adhesive strength when it is applied to a difficult to bond material, such as polyethylene, and oriented polypropylene. When a polyurethane resin or an epoxy resin is added to the adhesive composition, the amount of water-dispersible polyester resin is preferably 0.1 to 0.5 wt %, based on the adhesive solids in the water-based adhesive emulsion composition.

The water-based adhesive composition should maintain an appropriate viscosity for application onto a substrate. The viscosity, as measured by a Brookfield viscometer model RVF, with a #4 spindle, at 20 rpm and 25 °C, can range from 200 to 65,000 cps; preferably 300 -30,000 cps. The viscosity for spray application can range from 200 to 750 cps, preferably 400 -500 cps. For roller applications, the viscosity typically ranges from 10,000 to 30,000 cps. The viscosity may be adjusted to a desired range by the addition of water or a thickener, such as an acrylic polymer dispersion. Examples of commercially available acrylic polymer thickener are ALCOPRINT® PA-NS thickener, ALCOPRINT PBA thickener, ALCOPRINT PFL thickener, ALCOPRINT PSC thickener, and ALCOPRINT PTF thickener, available from Ciba Specialty Chemicals Inc.

Another embodiment of this invention is a multi-layer composite comprising:
at least one layer of a substrate such as polystyrene, polyester, ABS resin, plywoods such as hard board and waterproof plywood, asphalt board, metal plate, medium density fiber (MDF) or particle board, slate, mortar, concrete, cement, paper, textile, cloth, and difficult to bond materials; and
at least one layer of the aqueous based adhesive emulsion composition comprising 30 to 60 wt % water and 40 to 70 wt % non-water adhesive solids, the adhesive solids comprising:
   (a) 90 to 99.9 % by weight of a VAE polymer;
   (b) 0.1 to 10 % by weight of a water-dispersible polyester; and, optionally,
   (c) 0.01 to 1 % by weight of an emulsifier.

Examples of substrates to which the water-based adhesive composition may be applied, include, but are not limited to, synthetic resins such as polystyrene, polyester, ABS resin, plywoods such as hard board, asphalt board, metal plate, MDF, waterproof plywood, slate, mortar, concrete, cement, paper, textile, cloth, and difficult to bond materials. Although not all inclusive, examples of difficult to bond materials are polyethylene, poly(ethylene terephthalate) (PET), metallized poly(ethylene terephthalate) (MPET), polypropylene, oriented polypropylene (OPP), polyester, aluminum foil, and coated paperboard. Included among the difficult to bond surfaces are surfaces having a surface energy of less than about 40 dynes/cm².

The invention will be further clarified by a consideration of the following examples, which are intended to be purely exemplary of the use of the invention.

### EXAMPLES

The viscosity of six water-based adhesive compositions was measured using a Brookfield viscometer Model RVF, with a #4 spindle, at 20 rpm and 25 °C. Water-based adhesive compositions (No. 1-6) were produced by making a formulation containing
a) a VAE polymer emulsion (87 wt % vinyl acetate; 13 wt % ethylene; 55% solids; Tg = 0°C);
b) EW-100 water-dispersible sulfonated polyester resin dispersion (25 % solids); and
c) a polyoxyethylene nonyl phenyl ether emulsifier containing on average 10 EO (oxyethylene) groups (100% active).
Table 1 shows the adhesive solids content of the water-based adhesive composition, pH, and viscosity (25 °C). The amounts of the polyester resin dispersion and emulsifier are in parts per 100 parts VAE polymer resin (phr).

**Table 1**

| Composition No. | 1 | 2 | 3 | 4 | 5 | 6 |
|---|---|---|---|---|---|---|
| VAE copolymer emulsion (55%) | 100 | 100 | 100 | 100 | 100 | 100 |
| Polyester resin dispersion (25%) | - | 2 | 3 | 5 | 7 | 10 |
| Polyoxyethylene nonyl phenyl ether | - | 0.1 | 0.1 | 0.1 | 0.1 | 0.1 |
| Solids (%); formulation | 56.1 | 55.8 | 55.3 | 54.6 | 53.9 | 53.3 |
| PH | 4.79 | 4.77 | 4.79 | 4.80 | 4.80 | 4.80 |
| Viscosity (cps) | 4,000 | 15,000 | 18,100 | 29,000 | 38,000 | 62,000 |
| Solids, pH and viscosity were measured according to KS (M) 3705. | | | | | | |

The purpose of this measurement was to detect the changes in viscosity and phase when the water-dispersible polyester resin was mixed with a VAE copolymer emulsion. According to Table 1, the viscosity increased as the amount of water-dispersible polyester resin in the formulation increased.

### EXAMPLES 1-9 AND COMPARATIVE EXAMPLES C1-C2 PREPARATION OF WATER-BASED ADHESIVE RESIN COMPOSITIONS

Water-based adhesive compositions of Examples 1-9 were produced by making a formulation of a) a VAE copolymer emulsion (55% solids; Tg = 0°C; 87 wt % vinyl acetate, 17 wt % ethylene); b) EW-100 water-dispersible sodium sulfonated polyester resin (25% solids); and c) polyoxyethylene nonyl phenyl ether containing 10 EOs (100% active); however, Example 9 contained only components a) and b). The amounts of each component other than the VAE polymer emulsion in Table 2 are indicated as phr. The adhesive compositions of Examples 2 to 8 contained at least one of the following additional components: dibutylphthalate plasticizer; toluene solvent; W-200 hexamethylene diisocyanate polyurethane water dispersion (40% solids), from Jinkwang Chemical Inc., Korea; and KER 828 epoxy resin having an epoxy content of 5260-5420 mmol/kg, from Kumho Petrochemical Co., Ltd. The polyurethane hardener was W-101 isocyanate from Jinkwang Chemical, Korea and the epoxy hardener was ANQUAMINE® epoxy curing agent, from Air Products and Chemicals, Inc. Table 2 shows the content of each example.

**Table 2**

| Example | 1 | 2 | 3 | 4 | 5 | 6 | 7 | 8 | 9 | C1 | C2 |
|---|---|---|---|---|---|---|---|---|---|---|---|
| VAE copolymer emulsion (55%) | 100 | 100 | 100 | 100 | 100 | 100 | 100 | 100 | 100 | 100 | - |
| Polyester resin dispersion (25%) | 5 | 5 | 5 | 5 | 5 | 5 | 15 | 15 | 5 | - | 100 |
| Polyoxyethylene nonyl phenyl ether | 0.1 | 0.1 | 0.1 | 0.1 | 0.1 | 0.1 | 0.1 | 0.1 | - | - | - |
| Dibutylphthalate | - | 2 | 7 | 2 | 2 | 5 | - | - | - | 2 | - |
| Toluene | - | - | - | 2 | 7 | 7 | - | - | - | 7 | - |
| Polyurethane dispersion | - | - | - | - | - | - | 30 | - | - | - | - |
| Epoxy resin | - | - | - | - | - | - | - | 20 | - | - | - |
| Polyurethane hardener | - | - | - | - | - | - | 5 | - | - | - | - |
| Epoxy resin hardener | - | - | - | - | - | - | - | 10 | - | - | - |

Table 3 shows the resin solid content and viscosity of the water-based adhesive compositions of Examples 1-9 and Comparative Examples 1-2. A 75 g/cm² coating of the water-based adhesive compositions of Examples 1-9 and Comparative Examples 1-2 were applied onto particle board (thickness: 15 mm). The particle board was then covered by a semi-rigid PVC film (thickness: 0.2 mm), compressed at a pressure of 1 kg/cm², and aged for 24 hours to give a test substrate. Table 3 shows the storage stability, adhesiveness, wood breakage and heat resistance of the test substrate at ambient, elevated and low temperatures. The adhesiveness was also tested on PVC film-cloth substrates. A 75 g/cm² coating of the water-based adhesive compositions of Examples 1-9 and Comparative Examples 1-2 were applied onto a semi-rigid PVC film (thickness: 0.2 mm). The film was then covered by cotton, compressed at a pressure of 1 kg/cm², and aged for 24 hours to give a test substrate.

The physical properties were measured by the following methods:
Storage stability: The low temperature storage stability was tested by measuring the viscosity after storing the water-based adhesive composition at 4 °C for 24 hours, then adjusting the temperature to 25 °C. The ambient temperature storage stability was tested by measuring the viscosity after storing the composition at 25 °C for a week. The elevated temperature storage stability was tested by measuring the viscosity after storing the composition at 50 °C for a week, then adjusting the temperature to 25 °C. Adhesiveness: The peel strength of the test substrate (particle board-PVC film, PVC film-cotton cloth) was measured according to Korean Standard KS(M) 3705. ASTM D903-49 (1983) is an equivalent standard.
Wood breakage: The peel strength at ambient temperature and -10°C was measured, and used as the rate of transfer of particle board onto the PVC film.
Heat resistance: The test substrate was cut into 1 inch x 5 inch segments, a 500 g weight was attached to the substrate, and the length of peel measured for 30 minutes at 60°C.

**Table 3**

| | Ex 1 | Ex 2 | Ex 3 | Ex 4 | Ex 5 | Ex 6 | Ex 7 | Ex 8 | Ex 9 | C1 | C2 |
|---|---|---|---|---|---|---|---|---|---|---|---|
| Solid(%) | 53.2 | 53.7 | 52.2 | 51.9 | 53.9 | 52.2 | 42.2 | 44.3 | 53.6 | 53.2 | 25 |
| Vis.(25 °C) (cps x 10³) | 33.7 | 34.6 | 30.5 | 38,5 | 58.4 | 50.6 | 20.0 | 20.0 | 35.0 | 15.4 | 0.080 |
| Vis.(25 °C) After 1 week (cps x 10³) | 31.0 | 34.6 | 30.0 | 38.5 | 48.3 | 44.6 | 21.0 | 19.0 | 56.0 | 15.1 | 0.080 |
| Vis.(4 °C) After 1 day. (cps x 10³) | 116.0 | 116.0 | 110.0 | 106.0 | 157.0 | 114.0 | 79.5 | 79.5 | 126.0 | 25.8 | 0.250 |
| Vis.(50 °C) After 1 week (cps x 10³) | 29.0 | 28.5 | 27.6 | 30.5 | 43.3 | 40.3 | 19.0 | 20.5 | 98.0 | 13.1 | 0.075 |
| Peel strength* (kgffin) | 2.5 | 2.2 | 2.3 | 2.6 | 2.5 | 2.6 | 2.8 | 2.9 | 2.6 | 1.5 | 0 |
| Wood breakage (ambient temp, %) | 100 | 100 | 100 | 100 | 100 | 100 | 100 | 100 | 100 | 0 | 0 |
| Wood breakage (-10 °C, %) | 0 | 0 | 0 | 100 | 100 | 100 | 100 | 100 | 100 | 0 | 0 |
| Heat resistance (60 °C, mm/30 min) | 0.13 | 1.40 | 0.47 | 1.23 | 0.90 | 1.20 | 0.6 | 0.7 | 0.14 | 1.50 | nd |

| | | | | | | | | | | | |
|---|---|---|---|---|---|---|---|---|---|---|---|
| * peel strength of particle board/PVC film; kgf = kg force; nd = not determined. | | | | | | | | | | | |

The data in Table 3 show that there was little or no change in viscosity of the water-based adhesive compositions in Examples 1 through 8 at ambient temperature (25 °C) after one-week storage. This shows the excellent storage stability of the compositions at ambient temperature.

The substrates, onto which the water-based adhesive compositions of Examples 1 to 9 were applied, have superior peel strength, as compared to the substrates of Comparative Examples 1-2. From these results, it is clear that the water-based adhesive composition according to the present invention was an excellent adhesive. Particularly, the PVC film to cloth in Examples 7 and 8 displayed excellent peel strength.

The substrates of Examples 1 through 9 provide excellent wood breakage at ambient temperature and substrates of Examples 4-9 had excellent wood breakage at -10 °C, as compared to the wood breakage of Comparative Examples 1-2. These data show that the water-based adhesive compositions of this invention provide excellent bond strength against a substrate at low temperature as well as at ambient temperature.

The data also show that the water-based adhesive composition of this invention provides an excellent heat resistant bond strength.

These data show that a water-based adhesive composition according to the present invention has excellent storage stability at ambient, low and elevated temperatures, as well as excellent adhesiveness, heat resistance and bond strength when applied to a substrate. They also show that the compositions can be very useful for the lamination of a film to wood or film to cloth. Since the water-based adhesive compositions according to the invention does not comprise a rosin or a conventional resin, the process of pre-melting or heating the rosin or conventional resin in solvent is not required. Thus, the present invention can economically produce water-based adhesive compositions. The present invention can use a small amount of a solvent or a plasticizer, while not using a rosin or a conventional resin, thereby preventing odors caused by these materials.

Various modifications and alternations that do not depart from the scope and spirit of this invention will become apparent to those skilled in the art.

## Claims

1. A water-based adhesive emulsion composition comprising 30 to 60 wt % water and 40 to 70 wt % non-water adhesive components (solids), the adhesive solids comprising:
(a) 90 to 99.9 wt % of a vinyl acetate-ethylene polymer;
(b) 0.1 to 10 wt % of a water-dispersible polyester; and
(c) 0 to 1 wt % of an emulsifier.

2. The adhesive emulsion composition of claim 1 wherein the emulsifier is present in an amount of 0.1 to 1 wt %.

3. The adhesive emulsion composition of claim 2 wherein the vinyl acetate-ethylene polymer comprises emulsion polymerized units of 80 to 98 wt % vinyl acetate, 2 to 20 wt % ethylene, and 0 to 10 wt % of one or more other ethylenically unsaturated monomer, based on the total weight of monomers; the water-dispersible polyester comprises a sulfonated polyester dispersion.

4. The adhesive emulsion composition of claim 2 wherein the vinyl acetate-ethylene polymer comprises emulsion polymerized units of 83 to 97 wt % vinyl acetate, 3 to 17 wt % ethylene, and 0 to 5 wt % of one or more other ethylenically unsaturated monomer, based on the total weight of monomers; and the water-dispersible polyester comprises a sulfonated polyester dispersion.

5. The adhesive emulsion composition of claim 4 wherein the other ethylenically unsaturated monomer is N-methylolacrylamide in an amount of 0.03 to 3 wt %.

6. The adhesive emulsion composition of claim 2 wherein the water-dispersible polyester comprises the reaction product of:
a) an acid component comprising:
10-15 mol % of an aromatic dicarboxylic acid containing a sulfonate metal salt;
30-90 mol % of an aromatic dicarboxylic acid which does not contain a sulfonate metal salt;
0.5-10 mol % of a polycarboxylic acid having a functionality of 3 or more;
0.5-10 mol % of a dimeric acid having a carbon number of 36-72; and
59.5 mol % or less of an aliphatic or cycloaliphatic dicarboxylic acid; and
b) a glycol component.

7. The adhesive emulsion composition of claim 6 wherein the metal salt is a sodium salt.

8. The adhesive emulsion composition of claim 2 wherein the emulsifier is a nonionic emulsifier.

9. The adhesive emulsion composition of claim 8 wherein the emulsifier is a polyoxyethylene nonyl phenyl ether containing 10 oxyethylene groups.

10. A multi-layer material comprising:
at least one layer of a substrate; and
at least one layer of a water-based adhesive emulsion composition comprising 30 to 60 wt % water and 40 to 70 wt % non-water adhesive components (solids), the adhesive solids comprising:
(a) 90 to 99.9 wt % of a VAE polymer;
(b) 0.1 to 10 wt % of a water-dispersible polyester; and
(c) 0 to 1 wt % of an emulsifier..

11. The multi-layer material of claim 10 wherein the emulsifier is present in an amount of 0.1 to 1 wt %.

12. The multi-layer material of claim 11 wherein the vinyl acetate-ethylene polymer comprises emulsion polymerized units of 80 to 98 wt % vinyl acetate, 2 to 20 wt % ethylene, and 0 to 10 wt % of one or more other ethylenically unsaturated monomer, based on the total weight of monomers; the water-dispersible polyester comprises a sulfonated polyester dispersion.

13. The multi-layer material of claim 11 wherein the vinyl acetate-ethylene polymer comprises emulsion polymerized units of 83 to 97 wt % vinyl acetate, 3 to 17 wt % ethylene, and 0 to 5 wt % of one or more other ethylenically unsaturated monomer, based on the total weight of monomers; the water-dispersible polyester comprises a sulfonated polyester dispersion.

14. The multi-layer material of claim 13 wherein the other ethylenically unsaturated monomer is N-methylolacrylamide in an amount of 0.03 to 3 wt %.

15. The multi-layer material of claim 11 wherein the water-dispersible polyester comprises the reaction product of:
a) an acid component comprising:
10-15 mol % of an aromatic dicarboxylic acid containing a sulfonate metal salt;
30-90 mol % of an aromatic dicarboxylic acid which does not contain a sulfonate metal salt;
0.5-10 mol % of a polycarboxylic acid having a functionality of 3 or more;
0.5-10 mol % of a dimeric acid having a carbon number of 36-72; and
59.5 mol % or less of an aliphatic or cycloaliphatic dicarboxylic acid; and
b) a glycol component.

16. The multi-layer material of claim 15 wherein the sulfonate metal salt is a sulfonated sodium salt.

17. The multi-layer material of claim 11 wherein the emulsifier is a nonionic emulsifier.

18. The multi-layer material of claim 17 wherein the emulsifier is a polyoxyethylene nonyl phenyl ether containing 10 oxyethylene groups.
